# EUROPEAN PATENT SPECIFICATION

(11) **EP 1 811 534 B1**
(45) Date of publication and mention of the grant of the patent: **05.11.2014**
(21) Application number: 07100573.0
(22) Date of filing: 16.01.2007
(51) Int. Cl.: H01H 1/58, H01H 9/06, H01H 9/08, B60Q 1/14, F16H 59/02, G05G 9/047

(54) **Mounting of electrical devices on the end of control levers.**
Montage von elektrischen Vorrichtungen am Ende von Bedienungshebeln
Montage de dispositifs électriques à l'extrémité de leviers de commande.

(30) Priority: 18.01.2006 GB 0600996
(43) Date of publication of application: 25.07.2007
(73) Proprietor: CNH U.K. LIMITED, Basildon, Essex S14 3AD (GB)
(72) Inventor: Mowatt, Jeffrey William, Billericay, Essex CM11 1BY (GB); Kindred, Thomas Charles, Wickford, Essex SS12 9GB (GB)
(74) Representative: CNH Industrial IP Department

(56) References cited:
- DE-A1- 19 538 767
- DE-C1- 19 505 215
- FR-A- 2 707 721
- FR-A- 2 796 201
- US-A- 5 247 849
- US-A- 6 020 563

## Description

This invention is concerned with mounting an electrical device, such as a switch, on the end of a control lever.

There are many situations, too numerous to list, in which it is desirable to mount a switch, or another electrical device such as a potentiometer or a sensor, on the end of a control lever. For example, if the control lever is a gear change lever of a vehicle, a switch may be used to activate an electrical overdrive or to select a sports mode of an automatic gearbox. If the control lever is a joy stick, a switch may act as a "fire" button.

In all situations where an electrical device is mounted on the end of a control lever, it is not practicable to have the wire leading to the switch outside the control lever and it has previously been proposed to run a wire down the entire length of the lever, the latter being constructed as a hollow tube. The prior art proposals, however, present problems both in threading a wire through a tube and in establishing connections with the ends of the wire.

For example, an electrical device in a handle at the end of a control lever may first be connected to a wire and the wire then threaded through the control lever and pulled taut from the other end. If this is done, aside from the intricate operation required to connect the wire to the switch, replacement of the switch cannot be carried out without access to both ends of the control lever.

FR-A-2 796 201 discloses a car switch in a control lever comprising a flexible printed circuit fitting in a housing and defining at least one of the contacts.

FR-A-2 707 721 discloses a gearbox control lever consisting of a hollow tube and a handle with a switch, whereby the wiring for connecting the switch is fixed to an element mountable on the hollow tube.

The present invention therefore seeks to provide apparatus which provides a convenient way of mounting an electrical device on the end of a control lever, which eases initial assembly and allows simple removal and replacement of the electrical device without the need to have access to both ends of the control lever.

According to the present invention, there is provided a hollow tube according to claim 1.

The tube is preferably made of metal to provide the rigidity and strength necessary for the tube to be able to serve as a control lever. In some cases, these physical requirements may be met by the use of a tube of a plastics material.

If the tube is made of metal, the tube may itself act as one of the connections (e.g. ground) and a single electrical conductor isolated from the tube may be all that is needed. If the tube is of plastics material or if the electrical device requires more than two connections, then a plurality of longitudinally extending and mutually electrically isolated conductors may be provided on the inner surface of the tube, or moulded into the tube in the same was as the tracks on a printed circuit board.

Preferably, there should be a feature on the tube and handle to allow correct orientation of the connections at the ends of the tube.

The invention further provides a control lever comprising a tube as set forth above and a handle carrying an electrical device secured to one end of the tube, wherein, in order to establish electrical connection to the internal conductors of the tube, the handle incorporates a plug having on its outer surface contacts connected to the electrical device, the plug being inserted into the end of the tube. If the tube is produced from a polymer, the tracks may be moulded in a laminated form within the tube.

A grub screw may conveniently be used to retain the handle on the end of the lever.

The invention will now be described further, by way of example, with reference to the accompanying drawings, in which :
Figure 1 is a side view of a control lever having a handle carrying an electrical switch,
Figure 2 is a schematic section along the line II-II in Figure 1, and
Figure 3 is a section through the end of the control lever and the handle.

The drawings show a control lever 10 having a handle 12 at one end which carries an electrical switch 14. The switch 14 is connected to a cable 16 at the other end of the lever 10.

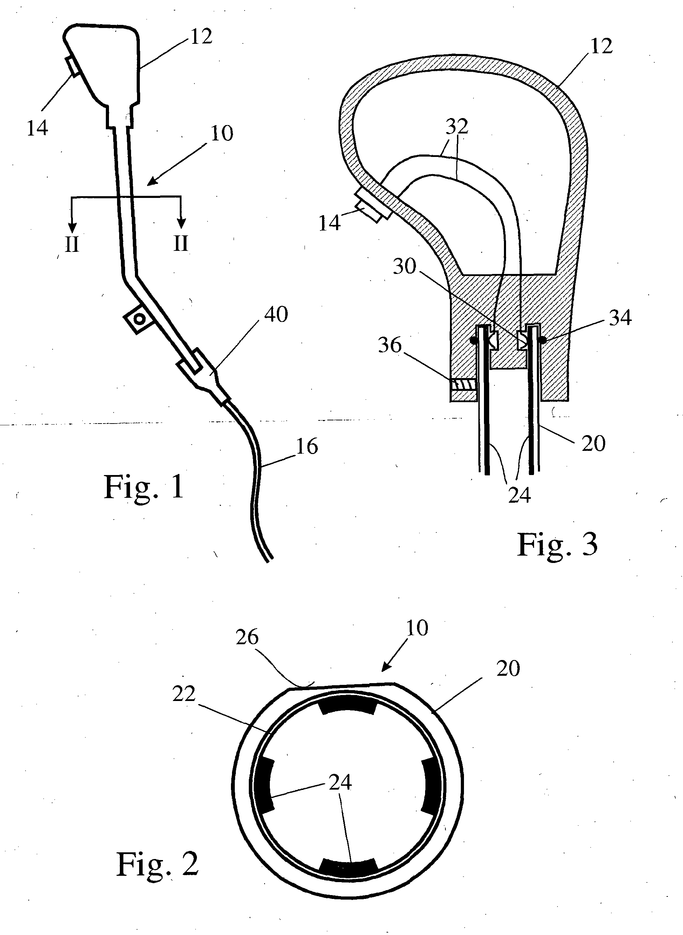

To establish an electrical connection between the cable 16 and the switch 14 without having to thread wires through the tube lever 10, the latter is constructed in the manner shown in section in Figure 2. The lever is formed of a metal tube 20 lined with an insulating material 22. The insulating material 22 carries parallel conductive copper tracks 24 which extends throughout the length of the tube. The thickness of the tracks 24 is exaggerated in Figure 2. In practice, the tracks resemble the tracks on a printed circuit board and will barely stand proud of the surface of the insulating layer 22. If the outer tube 20 is formed of an electrically insulating material rather than a metal then one can dispense with the insulating material 22.

A flat 26, or some other convenient formation, is formed on the outer surface of the tube 20 to assist in identifying the position of the tracks 24. In the case of the illustrated embodiment, there are four equally circumferentially spaced tracks 24 but their number and positions may differ from that illustrated depending on the number of electrical connections required.

It is possible if the tube is made of metal for it to act as one of the electrical connections to the switch 14 and therefore the tube of Figure 2 can allow a maximum of five separate connections to be made to the electrical circuitry in the handle 12.

If the tube 20 is uniform along its entire length, so that a section taken at any point along the length of the tube will be the same as that shown in Figure 2, one can then mount a handle 12 at any point on the tube 20. This is not however essential as the entire tube may be moulded.

A connection is made to the tracks 24 through an edge connector formed on a plug that is inserted into the end of the tube 20. In Figure 3, the end of the handle 12 is formed as a plug having an annular recess for receiving the end of the tube 20. Contacts 30 connected by wires 32 to the switch 14 establish electrical contact with the tracks 24 when the handle is fitted to the end of the tube 20 and an 0-ring 34 seals against the outer surface of the tube 20. A grub screw 36 retains the handle 12 on the tube 20.

A plug 40 for connecting the cable 16 to the opposite end of the control lever 10 may be constructed in an analogous manner.

## Claims

1. A hollow tube for use as a control lever,
said tube (20) having at least one electrical conductor (24) secured to and extending over the entire length of the inner surface (22) of the tube (20) and electrically isolated from the outer surface of the tube (20); and
**characterized in that** said at least one electrically isolated conductor (24) is formed as a track on the inner surface of the tube (20) when said tube is made of metal, or that a further electrically isolated conductor (24) is formed as a track on the inner surface of the tube (20) when said tube is made of a plastics material.

2. A hollow tube as claimed in any preceding claim, having a plurality of longitudinally extending and mutually electrically isolated conductors (24).

3. A hollow tube as claimed in any preceding claim, wherein a feature (26) is provided on the tube (20) and handle (12) to allow correct orientation of the connections at the ends of the tube.

4. A control lever comprising a tube (20) as claimed in any preceding claim and a handle (12) carrying an electrical device (14) secured to one end the tube (20), wherein, in order to establish electrical connection to the internal conductors (24) of the tube, the handle incorporates a plug having on its outer surface contacts (30) connected to the electrical device, the plug being inserted into the end of the tube (20).

5. A control lever as claimed in claim 4, wherein a grub screw (36) is provided to retain the handle (12) on the end of the lever (10).

## Patentansprüche

1. Ein hohles Rohr zur Verwendung als ein Bedienungshebel, wobei das Rohr zumindest einen elektrischen Leiter (24) aufweist, der an der Innenoberfläche (22) des Rohres (20) angebracht ist und sich über die gesamte Länge der Innenoberfläche (22) des Rohres (20) erstreckt und elektrisch von der Außenoberfläche des Rohres (20) isoliert ist; und
**dadurch gekennzeichnet, dass** der zumindest eine elektrisch isolierte Leiter (24) als Leiterbahn auf der Innenoberfläche des Rohres (20) ausgebildet ist, wenn das Rohr aus Metall hergestellt ist, oder das ein weiterer elektrisch isolierter Leiter (24) als eine Leiterbahn auf der Innenoberfläche des Rohres (20) ausgebildet ist, wenn das Rohr aus einem Kunststoff-Material hergestellt ist.

2. Ein hohles Rohr nach einem vorhergehenden Anspruch, das eine Mehrzahl von sich in Längsrichtung erstreckenden und gegenseitig elektrisch isolierten Leitern (24) aufweist.

3. Ein hohles Rohr nach einem der vorhergehenden Ansprüche, bei dem ein Merkmal (26) auf dem Rohr (20) und einem Handgriff (12) vorgesehen ist, um eine korrekte Ausrichtung der Verbindungen an den Enden des Rohres zu ermöglichen.

4. Ein Bedienungshebel, der ein Rohr (20) nach einem der vorhergehenden Ansprüche und einen ein elektrisches Gerät (14) tragenden Handgriff (12) umfasst, der an einem Ende des Rohres (20) befestigt ist, wobei zur Herstellung einer elektrischen Verbindung mit den innen liegenden Leitern (24) des Rohres der Handgriff einen Stopfen beinhaltet, der auf seiner Außenoberfläche Kontakte (30) beinhaltet, die mit dem elektrischen Gerät verbunden sind, wobei der Stopfen in das Ende des Rohres (20) eingesetzt ist.

5. Bedienungshebel nach Anspruch 4, bei dem eine Madenschraube (36) zum Halten des Handgriffes (12) an dem Ende des Hebels (10) vorgesehen ist.

## Revendications

1. Tube creux pouvant être utilisé comme un levier de commande,
ledit tube (20) comportant au moins un conducteur électrique (24) fixé à et s'étendant sur toute la longueur de la surface intérieure (22) du tube (20) et isolé électriquement de la surface extérieure du tube (20), et
**caractérisé en ce que** ledit au moins un conducteur isolé électriquement (24) est constitué sous forme de piste sur la surface intérieure du tube (20) lorsque ledit tube est en métal, ou **en ce qu'**un autre conducteur électriquement isolé (24) est constitué sous forme de piste sur la surface intérieure du tube (20) lorsque ledit tube est en matière plastique.

2. Tube creux selon l'une quelconque des revendications précédentes, comportant une pluralité de conducteurs s'étendant longitudinalement et électriquement isolés mutuellement (24).

3. A Tube creux selon l'une quelconque des revendications précédentes, caractérisé en que qu'un dispositif (26) est prévu sur le tube (20) et une poignée (12) pour permettre une orientation correcte des connexions aux extrémités du tube.

4. Levier de commande comprenant un tube (20) selon l'une quelconque des revendications précédentes et une poignée (12) portant un dispositif électrique (14) fixé à une extrémité du tube (20), **caractérisé en ce que**, pour établir une connexion électrique aux conducteurs internes (24) du tube, la poignée incorpore une fiche comportant sur sa surface extérieure des contacts (30) reliés au dispositif électrique, la fiche étant insérée dans l'extrémité du tube (20).

5. Levier de commande selon la revendication 4, **caractérisé en ce qu'**une vis sans tête (36) est prévue pour maintenir la poignée (12) sur l'extrémité du levier (10).
